(19) Europäisches Patentamt European Patent Office Office européen des brevets

(11) **EP 4 699 864 A1**

(12) **EUROPEAN PATENT APPLICATION**

(43) Date of publication:
**25.02.2026 Bulletin 2026/09**

(21) Application number: **24196146.5**

(22) Date of filing: **23.08.2024**

(51) International Patent Classification (IPC):
*B60P 1/04* (2006.01)    *B60W 30/04* (2006.01)

(52) Cooperative Patent Classification (CPC):
**B60P 1/045; B60W 30/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **PANAHANDEH, Ghazaleh**
**414 67 GÖTEBORG (SE)**
• **SÖDER, Richard**
**449 36 NÖDINGE (SE)**

(74) Representative: **Ström & Gulliksson AB**
**P.O. Box 4188**
**203 13 Malmö (SE)**

Remarks:
Amended claims in accordance with Rule 137(2) EPC.

(54) **ROLLOVER MITIGATION DURING TIPPING**

(57)    A method is disclosed for a vehicle comprising a vehicle body and a vehicle subsystem for load carrying configured to be increasingly tilted in relation to the vehicle body for load discharge during a tipping operation.

The method comprises (during the tipping operation) acquiring image data from a camera mounted on the vehicle body and configured to view a downward facing surface of the vehicle subsystem for load carrying, and determining respective distances from a location of the camera to two or more laterally spaced portions of the downward facing surface based on the image data.

The method further comprises estimating a lateral deflection of the vehicle subsystem for load carrying based on the determined distances, and causing a tipping interruptive action to be performed responsive to the lateral deflection fulfilling a condition indicating rollover risk.

Corresponding computer system, vehicle, computer program product, and non-transitory computer-readable storage medium are also disclosed.

FIG. 3A

EP 4 699 864 A1

## Description

## TECHNICAL FIELD

The disclosure relates generally to vehicle control. In particular aspects, the disclosure relates to rollover mitigation during tipping. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

It is common that a vehicle configured for transporting load is also configured for unloading by performing a tipping operation, whereby gravitational force is utilized to cause the load to slide off the vehicle.

Such unloading approaches are particularly suitable for (preferably non-delicate) loads that may be viewed as a continuous mass rather than individual items (e.g., sand, beets, debris, etc.). Such loads may be referred to as bulk loads and the corresponding unloading may be referred to as bulk discharge.

To this end, a vehicle may comprise a vehicle body and a vehicle subsystem for load carrying (e.g., including a tipper), wherein the vehicle subsystem for load carrying is configured to be increasingly tilted in relation to the vehicle body for load discharge during a tipping operation.

A problem with tipping operations is that rollover of the vehicle may occur. Rollover accidents are typically very expensive as they may cause irreversible damage to the vehicle.

Therefore, there is a need for approaches of mitigation of rollover during tipping operations (e.g., avoiding rollover, decreasing the probability of rollover, etc.).

## SUMMARY

Various aspects may aim to solve, mitigate, alleviate, or eliminate at least some of the above or other disadvantages.

According to a first aspect of the disclosure, a computer system is provided for a vehicle comprising a vehicle body and a vehicle subsystem for load carrying, wherein the vehicle subsystem for load carrying is configured to be increasingly tilted in relation to the vehicle body for load discharge during a tipping operation of the vehicle, and wherein a camera mounted on the vehicle body is configured to view a downward facing surface of the vehicle subsystem for load carrying. The computer system comprises processing circuitry configured to (during the tipping operation) acquire image data from the camera, determine respective distances from a location of the camera to two or more laterally spaced portions of the downward facing surface of the vehicle subsystem for load carrying based on the image data, estimate a lateral deflection of the vehicle subsystem for load carrying based on the determined distances, and cause a tipping interruptive action to be performed responsive to the lateral deflection fulfilling a condition indicating rollover risk.

The first aspect of the disclosure may seek to mitigate (e.g., avoid or decrease the probability of) rollover during the tipping operation. A technical benefit may include improved vehicle behavior (e.g., increased safety) during tipping operations. A technical benefit may include improved triggering of tipping interruptive action(s). For example, a probability of false alarm may be reduced; thereby reducing the occurrence of unnecessary tipping interruption. Alternatively or additionally, a probability of missed detection may be reduced; thereby reducing the occurrence of tipping accidents.

Optionally in some examples, including in at least one preferred example, at least two of the two or more laterally spaced portions of the downward facing surface of the vehicle subsystem for load carrying may be associated with an end of the vehicle subsystem for load carrying that is raised during the tipping operation. A technical benefit may include that the lateral deflection is most prominent towards the end of the vehicle subsystem that is raised during the tipping operation, so that the estimation of the lateral deflection is improved (e.g., in terms of accuracy, reliability, etc.) compared to if otherwise located portions were used.

Optionally in some examples, including in at least one preferred example, the condition indicating rollover risk may comprise the lateral deflection exceeding a threshold value for deflection. A technical benefit may include that simple and practical triggering of tipping interruptive action(s) is enabled.

Optionally in some examples, including in at least one preferred example, the condition indicating rollover risk may comprise a change rate of the lateral deflection exceeding a threshold value for deflection rate. A technical benefit may include that triggering of tipping interruptive action(s) may be even further improved (e.g., in terms of reduction of false alarm and/or missed detection).

Optionally in some examples, including in at least one preferred example, the condition indicating rollover risk may be dynamically set based on one or more of: a ground surface banking, a load mass, and a tipping angle. A technical benefit may include that triggering of tipping interruptive action(s) may be even further improved by adaptation to changing conditions.

According to a second aspect of the disclosure, a vehicle is provided, which comprises the computer system of the first aspect. The second aspect of the disclosure may seek to provide a vehicle with improved vehicle behavior during tipping operations.

According to a third aspect of the disclosure, a computer-implemented method is provided for a vehicle comprising a vehicle body and a vehicle subsystem for load carrying, wherein the vehicle subsystem for load carrying is configured to be increasingly tilted in relation to the vehicle body for load discharge during a tipping operation of the vehicle, and wherein a camera mounted on the vehicle body is configured to view a downward facing surface of the vehicle subsystem for load carrying. The method comprises (during the tipping operation) acquiring (by processing circuitry of a computer system) image data from the camera, determining (by the processing circuitry) respective distances from a location of the camera to two or more laterally spaced portions of the downward facing surface of the vehicle subsystem for load carrying based on the image data, estimating (by the processing circuitry) a lateral deflection of the vehicle subsystem for load carrying based on the determined distances, and causing (by the processing circuitry) a tipping interruptive action to be performed responsive to the lateral deflection fulfilling a condition indicating rollover risk.

The third aspect of the disclosure may seek to mitigate (e.g., avoid or decrease the probability of) rollover during the tipping operation. A technical benefit may include improved vehicle behavior (e.g., increased safety) during tipping operations. A technical benefit may include improved triggering of tipping interruptive action(s). For example, a probability of false alarm may be reduced; thereby reducing the occurrence of unnecessary tipping interruption. Alternatively or additionally, a probability of missed detection may be reduced; thereby reducing the occurrence of tipping accidents.

Optionally in some examples, including in at least one preferred example, at least two of the two or more laterally spaced portions of the downward facing surface of the vehicle subsystem for load carrying may be associated with an end of the vehicle subsystem for load carrying that is raised during the tipping operation. A technical benefit may include that the lateral deflection is most prominent towards the end of the vehicle subsystem that is raised during the tipping operation, so that the estimation of the lateral deflection is improved (e.g., in terms of accuracy, reliability, etc.) compared to if otherwise located portions were used.

Optionally in some examples, including in at least one preferred example, the condition indicating rollover risk may comprise the lateral deflection exceeding a threshold value for deflection. A technical benefit may include that simple and practical triggering of tipping interruptive action(s) is enabled.

Optionally in some examples, including in at least one preferred example, the condition indicating rollover risk may comprise a change rate of the lateral deflection exceeding a threshold value for deflection rate. A technical benefit may include that triggering of tipping interruptive action(s) may be even further improved (e.g., in terms of reduction of false alarm and/or missed detection).

Optionally in some examples, including in at least one preferred example, the condition indicating rollover risk may be dynamically set based on one or more of: a ground surface banking, a load mass, and a tipping angle. A technical benefit may include that triggering of tipping interruptive action(s) may be even further improved by adaptation to changing conditions.

Optionally in some examples, including in at least one preferred example, the tipping interruptive action may comprise issuing a warning message via an operator interface and/or inhibiting the tipping operation. A technical benefit may include that simple and practical tipping interruption is enabled.

Optionally in some examples, including in at least one preferred example, the method may further comprise acquiring (by the processing circuitry) inertial data from an inertial measurement unit (IMU) which is co-located and co-oriented with the camera, and wherein the lateral deflection of the vehicle subsystem for load carrying is further estimated based on the inertial data. A technical benefit may include that the lateral deflection estimation is improved (e.g., in terms of accuracy, reliability, etc.).

According to a fourth aspect of the disclosure, a computer program product is provided, comprising program code for performing the method of the third aspect when executed by processing circuitry.

According to a fifth aspect of the disclosure, a non-transitory computer-readable storage medium is provided, comprising instructions, which - when executed by processing circuitry - cause the processing circuitry to perform the method of the third aspect.

The fourth and/or fifth aspect of the disclosure may seek to convey program code for improving vehicle behavior during tipping operations. A technical benefit may include that new vehicles and/or legacy vehicles may be conveniently configured, by software installation/update, to (during a tipping operation) acquire image data from a camera, determine respective distances from a location of the camera to two or more laterally spaced portions of the downward facing surface of the vehicle subsystem for load carrying based on the image data, estimate a lateral deflection of the vehicle subsystem for load carrying based on the determined distances, and cause a tipping interruptive action to be performed responsive to the lateral deflection fulfilling a condition indicating rollover risk.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is a schematic drawing illustrating a vehicle according to some examples.

**FIG. 2A** is a schematic drawing illustrating a vehicle during a tipping operation according to some examples.

**FIG. 2B** is a schematic drawing illustrating lateral deflection for a vehicle according to some examples.

**FIG. 2C** is a schematic drawing illustrating two laterally spaced portions of a downward facing surface of a vehicle subsystem according to some examples.

**FIG. 3A** is a flowchart illustrating a method according to some examples.

**FIG. 3B** is a flowchart illustrating a method according to some examples.

**FIG. 4A** is a schematic drawing illustrating two different locations along the longitudinal dimension of a vehicle according to some examples.

**FIG. 4B** is a schematic drawing illustrating a cross section of a vehicle according to some examples.

**FIG. 5** is a schematic diagram illustrating a computer system for implementing examples disclosed herein, according to some examples.

**FIG. 6** is a schematic drawing illustrating a computer program product, in the form of a non-transitory computer-readable storage medium, according to some examples.

**FIG. 7** is a schematic block diagram of a control unit according to some examples.

## DETAILED DESCRIPTION

The detailed description set forth below provides information and examples of the disclosed technology with sufficient detail to enable those skilled in the art to practice the disclosure.

As already mentioned, a problem that may be experienced during a tipping operation performed by a vehicle is that rollover of the vehicle may occur. It should be noted that the approaches suggested herein are applicable to any situation where it is desired to avoid rollover during a tipping operation, even if some specific scenarios are used for exemplification.

Typically, rollover at standstill is due to a straight line, which follows the direction of the gravitation force through the center of gravity (CoG) of the vehicle, not passing through a lateral range extending from the sideways extreme ground-touching points of the vehicle (e.g., left and right wheels).

Example situations that may lead to rollover at standstill include uneven (non-horizontal) ground, large distance between ground and CoG of the vehicle, and a CoG which is not laterally centered in relation to the vehicle.

A tipping operation may cause the distance between ground and CoG to increase, especially if some of the load remains at the raised end of the vehicle subsystem for load carrying at relatively high tilting angles. Alternatively or additionally, a tipping operation may cause the CoG not to be laterally centered in relation to the vehicle, especially if the unloading is asymmetrical (e.g., more of the load remains on one side of the vehicle subsystem for load carrying than on the other side). For example, sticky load (e.g., moist sand) can increase the risk of either or both of these situations.

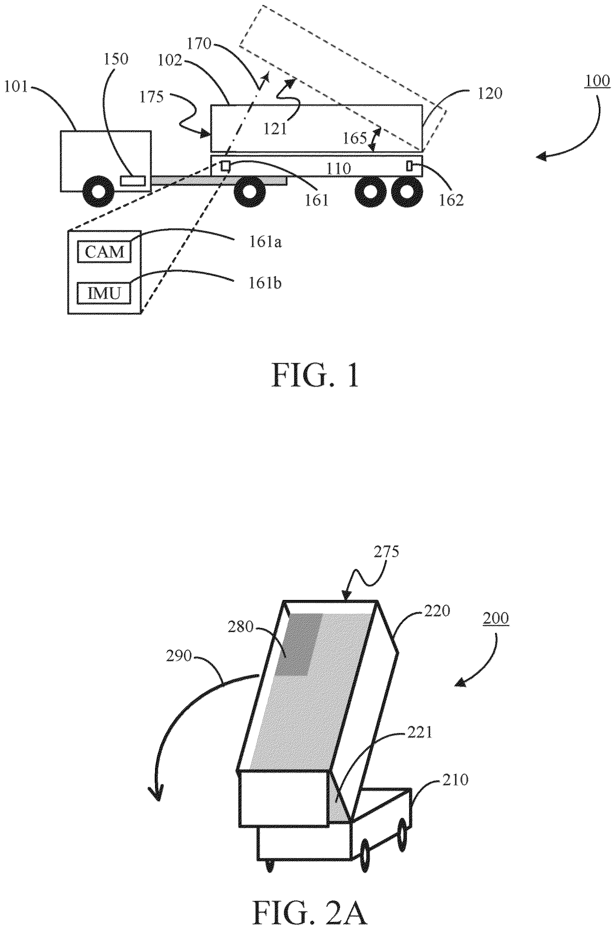

**FIG. 1** schematically illustrates an example vehicle **100** for cargo transport where the techniques disclosed herein can be advantageously applied. The vehicle **100** comprises a truck/tractor/towing unit **101** configured to tow one or more trailer unit(s) **102** in a known manner. It should be noted that - even though the vehicle **100** is used as an example - the approaches suggested herein may be equally applicable to load-transporting vehicles consisting of a single vehicle unit (i.e., tractor and trailer functions integrated into a single unit).

The tractor unit **101** and/or any of the trailer unit(s) **102** may comprise a vehicle control unit (VCU) configured to perform various control functions related to the vehicle, such as vehicle motion management (VMM).

In the example of **FIG. 1,** the trailer unit **102** of the vehicle **100** comprises a vehicle body **110** and a vehicle subsystem **120** for load carrying (i.e., a load-carrying vehicle subsystem; e.g., comprising a load-carrying bucket). The vehicle subsystem **120** for load carrying is configured to be increasingly tilted in relation to the vehicle body **110** for load discharge during a tipping operation of the vehicle **100** in a known manner. The tilting of the vehicle subsystem **120** for load carrying at a tipping angle **165** is schematically illustrated in dashed in the example of **FIG. 1.**

The end of the vehicle subsystem **120** for load carrying that is raised during the tipping operation is indicated by **175**. In the example of **FIG. 1,** the end **175** of the vehicle subsystem **120** for load carrying that is raised during the tipping operation is a forward-facing end. It should be noted that this is merely an example, and that a vehicle subsystem for load carrying may generally be configured to raise any one or more end(s) during a tipping operation.

The tractor unit **101** and/or the trailer unit **102** comprises processing circuitry forming part of a computer system for controlling the vehicle. In particular, the processing circuitry may be configured to monitor and/or control the tipping operation. In the example of **FIG. 1,** the processing circuitry is represented by a control unit **150,** which may be comprised in, or separate from, the VCU.

In various examples, the vehicle body **110** and/or the vehicle subsystem **120** for load carrying may comprise one or more sensors **161, 162** configured to provide information to the control unit **150.** At least one of the one or more sensors **161, 162** comprises a camera (CAM) **161a**, which is mounted on the vehicle body such that it can be configured to view a downward facing surface **121** of the vehicle subsystem **120** for load carrying, as illustrated by the line-of-sight indication **170.** Optionally, one or more of the one or more sensors **161, 162** may comprise a respective inertial measurement unit (IMU) **161b**. In some examples, an IMU is co-located and co-oriented with the camera as exemplified by the sensor unit **160** of **FIG. 1.** For example, the camera and the IMU may be comprised in, or implemented as, a single device/unit.

The information provided to the control unit **150** by the one or more sensors **161, 162** may be associated with respective lateral load balance metric(s) for location(s) along the longitudinal dimension of the vehicle **100**. For example, the information provided by a sensor **161, 162** to the control unit **150** may be data from which the lateral load balance metric of a location can be determined, or may be an indication of the lateral load balance metric itself.

The information may be provided directly from the sensor(s) **161, 162** to the control unit **150,** or may be provided via some other functional and/or structural unit. For example, the sensor(s) **161, 162** may provide measurement data to a determination module (not shown) configured to determine the lateral load balance metric(s), and the determination module may be configured to provide the determined lateral load balance metric(s) to the control unit **150.**

**FIG. 2A** schematically illustrates a vehicle **200** during a tipping operation. For example, the vehicle **200** of **FIG. 2A** may be seen as a schematic representation of the trailer unit **102** or the vehicle **100** of **FIG. 1.**

The vehicle **200** comprises a vehicle body **210** and a vehicle subsystem **220** for load carrying. The vehicle subsystem **220** for load carrying is configured to be increasingly tilted in relation to the vehicle body **210** for load discharge during a tipping operation of the vehicle **200** in a known manner, by raising one end **275** (compare with **175** of **FIG. 1**) of the vehicle subsystem **220** for load carrying. In the example of **FIG. 2A,** the vehicle subsystem **220** for load carrying is shown in a tilted position, in which gravitational force is utilized to cause the load (represented in grey) to slide off the vehicle **200** through an end **221** (opposite to the end **275**) of the vehicle subsystem **220** for load carrying.

The distance between ground and the CoG of the vehicle **200** potentially increases with the tilting of the vehicle subsystem **220** for load carrying in relation to the vehicle body **210**. This is particularly possible if the load does not easily slide of the vehicle subsystem **220** for load carrying, so that some of the load **280** remains at the raised end of the vehicle subsystem **220** for load carrying even at relatively high tilting.

Alternatively or additionally, if the load dispatch is not laterally symmetric (so that - at some moment in time during dispatch - more load remains in one lateral half of the vehicle subsystem **220** for load carrying than in the other lateral half; compare with **280**), the CoG of the vehicle **200** is potentially not laterally centered during the tipping operation.

Thus, the tipping operation may increase the risk of rollover **290** as explained above, especially if the ground is not completely horizontal and/or the load mass is laterally asymmetric. Approaches suggested herein aim to mitigate (e.g., avoid and/or decrease the probability of) rollover in these and/or other situations, and may be applicable during any tipping operation (e.g., when the vehicle is stationary and/or when the vehicle is in motion; e.g., spreading salt or sand in icy conditions).

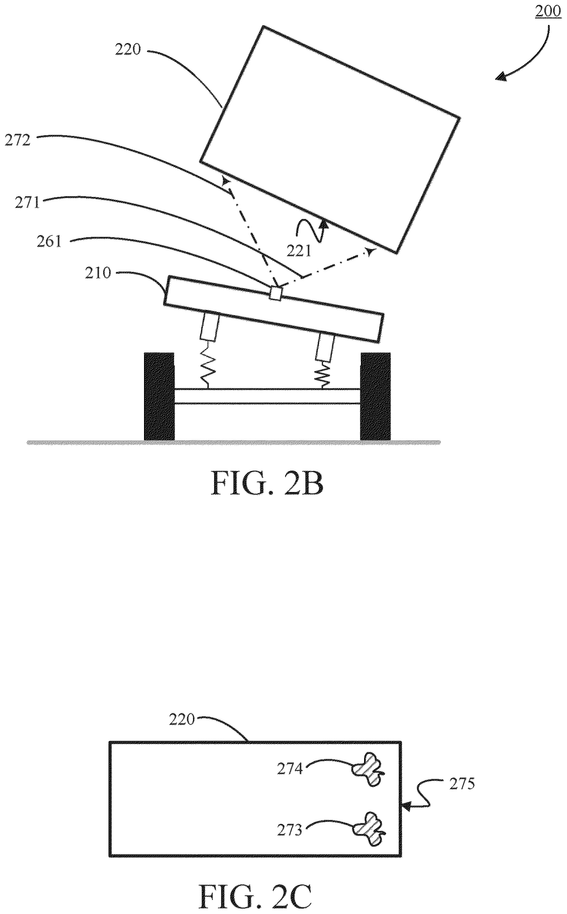

**FIG. 2B** schematically illustrates a cross section along a front wheel axis of a vehicle **200** during a tipping operation. For example, the vehicle **200** of **FIG. 2B** may be seen as a representation of the trailer unit **102** or the vehicle **100** of **FIG. 1.** Alternatively or additionally, the vehicle **200** of **FIG. 2B** may be seen as a representation of the vehicle **200** of **FIG. 2A.**

The vehicle **200** comprises a vehicle body **210** and a vehicle subsystem **220** for load carrying. The vehicle subsystem **220** for load carrying is configured to be increasingly tilted in relation to the vehicle body **210** for load discharge during a tipping operation of the vehicle **200** in a known manner. In **FIG. 2B,** the vehicle subsystem **220** for load carrying has one end (compare with **175** of **FIG. 1** and 275 of **FIG. 2A**) slightly raised for tipping, which is represented by a gap between the vehicle body **210** and a vehicle subsystem **220** for load carrying.

A sensor **261** (compare with **161** of **FIG. 1**) is configured to provide information to a control unit (compare with **150** of **FIG. 1**) for rollover mitigation. In the example of **FIG. 2B,** the sensor **261** is laterally centered and mounted on the front wheel axle. It should be noted that this location is merely an example, and that the sensor **261** may be laterally non-centered and/or have another longitudinal location than on the front wheel axle.

The sensor **261** comprises a camera (compare with **161a** of **FIG. 1**), which is mounted on the vehicle body such that it can be configured to view a downward facing surface **221** (compare with **121** of **FIG. 1**) of the vehicle subsystem **220** for load carrying. More particularly, the camera is configured to view at least two laterally spaced portions of the downward facing surface **221,** as illustrated by the indications **271, 272** (compare with **170** of **FIG. 1**). The camera enables the sensor **261** to provide information comprising image data to the control unit.

Optionally, the sensor **261** (and possibly one or more other sensors of the vehicle) may comprise a respective IMU (compare with **161b, 162** of **FIG. 1**). The IMU enables the sensor **261** to provide information comprising inertial data to the control unit.

As already mentioned, rollover during a tipping operation may be caused by one or more of: raised CoG, uneven ground (e.g., banking), laterally asymmetric load dispatch, laterally asymmetric load mass, etc.

**FIG. 2B** illustrates a scenario where the vehicle body **210** is tilted to in relation to the ground, and the vehicle subsystem **220** for load carrying is tilted in relation to the vehicle body **210**. Consequently, the vehicle subsystem **220** for load carrying is tilted in relation to the ground by an angle that corresponds to a sum of the tilt of the vehicle body **210** in relation to the ground and the tilt of the vehicle subsystem **220** for load carrying in relation to the vehicle body **210**.

To assess the probability of rollover properly (e.g., reliably and accurately), it is typically beneficial to obtain information relating to the tilt of the vehicle subsystem **220** for load carrying in relation to the ground, or the tilt of the vehicle body **210** in relation to the ground as well as the tilt of the vehicle subsystem **220** for load carrying in relation to the vehicle body **210**. Information regarding the tilt of the vehicle body **210** in relation to the ground may not always be sufficient to assess the probability of rollover properly (e.g., reliably and accurately), which may lead to overcautious approaches (false detection, mitigating rollover even when not needed) and/or perilous approaches (missed detection, failing to mitigate rollover when needed).

In some situations, the tilt of the vehicle body **210** in relation to the ground may be ignored (e.g., when it is relatively small in comparison to a rollover-causing tilt of the vehicle subsystem **220;** which may, for example, be the case when the wheels are rigidly attached to the vehicle body **210,** or using suspension with relatively small range between extreme positions).

The tilt of the vehicle body **210** in relation to the ground may be obtained via inertial data and the tilt of the vehicle subsystem **220** for load carrying in relation to the vehicle body **210** may be obtained via image data. When an IMU is co-located and co-oriented with the camera of the sensor **261** (i.e., when the movement of the camera corresponds to the movement of the IMU), the tilt of the vehicle subsystem **220** for load carrying in relation to the ground may be obtained based on a combination of the image data and the inertial data. When there is no IMU co-located and co-oriented with the camera of the sensor **261,** the tilt of the vehicle body **210** in relation to the ground could be ignored, or could be approximated using inertial data from one or more other sensor(s) of the vehicle.

**FIG. 2C** schematically illustrates the downward facing surface (compare with compare with **121** of **FIG. 1** and 221 of **FIG. 2B**) of a vehicle subsystem **220** for load carrying, with two laterally spaced portions **273, 274** that a camera (compare with **161a** of **FIG. 1** and the camera of **261** in **FIG. 2B**) may be configured to view (compare with indications **271, 272** of FIG. 2B) for tilt determination.

The two laterally spaced portions **273, 274** are located relatively close to an end **275** (compare with **175** of **FIG. 1** and 275 in **FIG. 2A**) of the vehicle subsystem **220** for load carrying that is raised during a tipping operation. More generally, the two laterally spaced portions **273, 274** are preferably associated with the end **275** of the vehicle subsystem **220** for load carrying that is raised during a tipping operation. For example, the two laterally spaced portions **273, 274** may be located somewhere on the part (e.g., half, quarter, etc.) of the vehicle subsystem **220** for load carrying which is closest to the end **275**. Also preferably (but not necessarily), the two laterally spaced portions **273, 274** have a same longitudinal location. Also preferably (but not necessarily), the two laterally spaced portions **273, 274** are laterally displaced from the camera by a same amount.

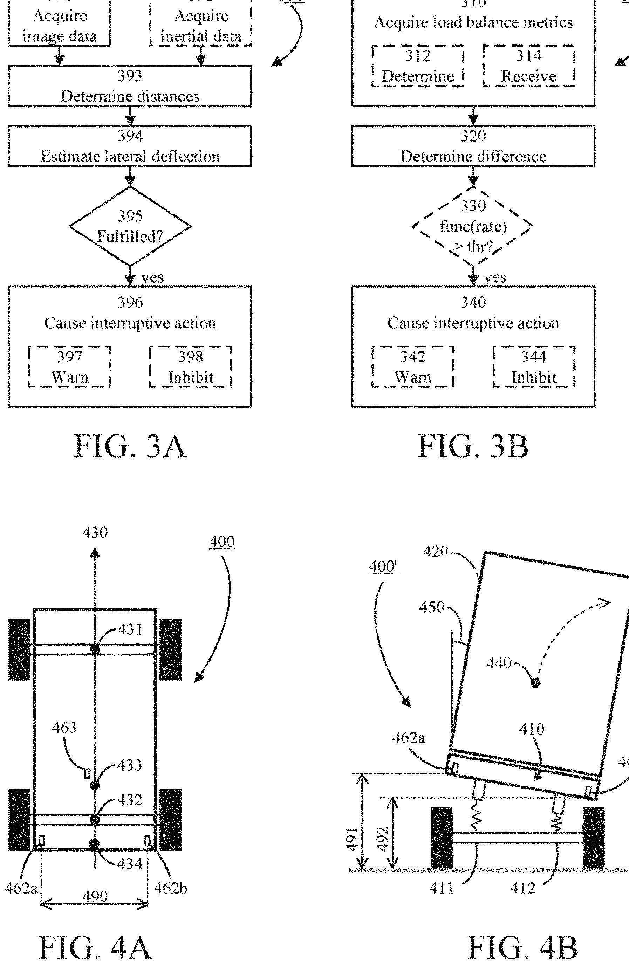

**FIG. 3A** illustrates an example method **390** suitable for mitigation of rollover. The method **390** is a computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle, and wherein a camera mounted on the vehicle body is configured to view a downward facing surface of the vehicle subsystem for load carrying. The method **390** is performed during the tipping operation.

For example, the method **390** may be applied in relation to any of the vehicles **100, 200** illustrated in **FIG. 1** and FIGs. 2A-C. In some examples, the method **390** is performed by processing circuitry forming part of a computer system for monitoring and/or controlling the tipping operation. For example, the method **390** may be performed by the control unit **150** illustrated in **FIG. 1.**

The method **390** may be applied alone or in combination with the method **300** of **FIG. 3B.**

As illustrated by step **391** and optional step **392,** information is acquired (e.g., received) from a sensor (compare with **161** of **FIG. 1** and 261 of **FIG. 2B**). The information comprises image data from the camera, and (optionally) inertial data from an IMU (e.g., co-located and co-oriented with the camera).

As illustrated by step **393,** respective distances are determined from a location of the camera to two or more laterally spaced portions (compare with **273, 274** of **FIG. 2C**) of the downward facing surface of the vehicle subsystem for load carrying based on the image data. The determination of the distances based on the image data may be performed in any suitable way (e.g., using approaches of the prior art).

Although not represented in **FIG. 3A,** the method **390** may also comprise determining an angle between the vehicle body and a horizontal plane based on the inertial data. The determination of the angle based on the inertial data may be performed in any suitable way (e.g., using approaches of the prior art). Some examples of determination of the angle based on the inertial data are elaborated on later herein in relation to **FIG. 4B.**

As illustrated by step **394,** a lateral deflection of the vehicle subsystem for load carrying is estimated based on the determined distances, and (optionally) based on the inertial data.

The lateral deflection may be defined and estimated in any suitable way and a few examples will be given in the following.

For example, the lateral deflection may be defined as a tilt of the vehicle subsystem for load carrying in relation to the vehicle body and/or in relation to the ground. Generally, the tilt may be expressed in any suitable way.

For example, the tilt may be expressed in terms of an angle between the vehicle subsystem for load carrying and the vehicle body, or between the vehicle subsystem for load carrying and the ground (e.g., a roll angle).

Alternatively or additionally, the tilt may be expressed in terms a difference between two distances, wherein each distance is between a respective lateral location on the vehicle subsystem for load carrying (the two respective lateral locations being different) and a respective location on the vehicle body and/or the ground. For example, the two respective lateral locations on the vehicle subsystem may correspond to locations within the two laterally spaced portions, or to the lateral edges of the vehicle subsystem. Alternatively or additionally, the respective location(s) on the vehicle body may correspond to the location of the camera, or to the lateral edges of the vehicle body. Yet alternatively or additionally, the respective location(s) on the ground may correspond to the lateral positions of the contact patch of the wheels, or to a projection to the ground (e.g., perpendicular to the ground surface, or in a direction of gravity) of lateral locations on the vehicle subsystem.

According to some examples, the lateral deflection is estimated as a difference between the distances determined in step **393.** Alternatively or additionally, knowledge regarding the vehicle geometry (typically including camera location and location of the two laterally spaced portions) may be used to transform the distances determined in step **393** and (optionally) the angle determined based on the inertial data to any other suitable metric for lateral deflection (e.g., as exemplified above).

Typically, the lateral deflection is dynamically estimated, which may be seen as tracking the lateral deflection value over time during the tipping operation, which enables monitoring of how the lateral deflection changes (e.g., increases/decreases) during the tipping operation.

Generally, the lateral deflection aims to indicate rollover risk. For example, if there is high and/or increasing lateral deflection, the rollover risk is typically relatively high.

When the lateral deflection fulfills a condition indicating rollover risk, as indicated by the "yes" path out of **395,** a tipping interruptive action is caused, as illustrated by step **396.**

For example, causing the tipping interruptive action may comprise performing the tipping interruptive action or sending a control signal to some other functional and/or structural unit configured to perform the tipping interruptive action responsive to receiving the control signal.

Generally, the tipping interruptive action may be any suitable tipping interruptive action. For example, the tipping interruptive action may comprise issuing a warning message via an operator interface as illustrated by optional sub-step **397.** Alternatively or additionally, the tipping interruptive action may comprise inhibiting (e.g., halting, stopping, or slowing down) the tipping operation as illustrated by optional sub-step **398.**

The warning message may be configured to enable an operator of the vehicle to evaluate the situation in relation to the rollover risk. For example, if a temporary support system is in place for hindering rollover (e.g., struts extending laterally from the vehicle), the operator may decide that no further measures need to be taken despite the warning message.

Alternatively or additionally, the warning message may be configured to prompt an operator of the vehicle to take action to prevent rollover. For example, the warning message may prompt (e.g., cause) the operator to halt, stop, or slow down the tipping operation, and/or to reposition the vehicle.

The operator interface may be any suitable man/machine interface (e.g., a visual interface, an audio interface, a haptic interface, etc.). The operator interface may be implemented within the vehicle (e.g., a dashboard, etc.) or within a separate device (e.g., a remote control unit, a smartphone, etc.).

Generally, the causing of the tipping interruptive action to be performed may be based on the instantaneous lateral deflection and/or the increase rate of the lateral deflection in any suitable way, as represented by **395.** For example, causing the tipping interruptive action may be performed responsive to a value of a function of the instantaneous lateral deflection and/or the increase rate of the lateral deflection exceeding a corresponding threshold value.

For example, the condition indicating rollover risk may comprise the (absolute value of) lateral deflection exceeding a threshold value for deflection. Alternatively or additionally, the condition indicating rollover risk may comprise a change rate (e.g., increase) of the lateral deflection exceeding a threshold value for deflection rate.

In a typical example, the "yes" path out of **395** is followed when the (absolute value of) lateral deflection exceeds the threshold value for deflection, as well as when the (absolute value of) lateral deflection does not exceed the threshold value for deflection but the change rate (e.g., increase) of the lateral deflection exceeds the threshold value for deflection rate. Thus, in this example, a relatively high lateral deflection always triggers a tipping interruptive action, while a lower lateral deflection may trigger a tipping interruptive action if it's increasing relatively fast (and - possibly - as long as the lateral deflection is not below some "completely safe" value).

It should be noted that different tipping interruptive action(s) may be triggered depending on the value(s) of the lateral deflection and/or the lateral deflection rate. For example, a relatively high lateral deflection could trigger a tipping interruptive action to be performed automatically, while a lower lateral deflection increasing relatively fast may trigger a warning message, or vice versa.

In some examples, the condition indicating rollover risk is dynamically set based on the current circumstances (e.g., ground surface banking, load mass, tipping angle, etc.). For example, threshold(s) may be lowered as the load mass increases. Alternatively or additionally, threshold(s) may be lowered as the tipping angle increases. Yet alternatively or additionally, threshold(s) may be lowered as the banking increases for rolling with the banking (threshold(s) may be raised as the banking increases for rolling against the banking).

FIG. 3B illustrates an example method 300 suitable for mitigation of rollover. The method 300 is a computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle. The method 300 is performed during the tipping operation.

For example, the method 300 may be applied in relation to any of the vehicles 100, 200 illustrated in FIG. 1 and FIGs. 2A-C. In some examples, the method 300 is performed by processing circuitry forming part of a computer system for monitoring and/or controlling the tipping operation. For example, the method 300 may be performed by the control unit 150 illustrated in FIG. 1.

The method 300 may be applied alone or in combination with the method 390 of FIG. 3A.

As illustrated by step 310, respective lateral load balance metrics are acquired for two (or more) different locations along the longitudinal dimension of the vehicle.

For example, the acquisition of a lateral load balance metric may comprise receiving information (e.g., measurement data; compare with 392 of FIG. 3A) from which the lateral load balance metric can be determined, and determining the lateral load balance metric as illustrated by optional sub-step 312. Alternatively, the acquisition of a lateral load balance metric may comprise receiving the lateral load balance metric (or an indication thereof) as illustrated by optional sub-step 314.

Generally, the load balance metric for a location along the longitudinal dimension of the vehicle may be any suitable load balance metric. For example, the load balance metric may comprise a roll angle at the location. Alternatively or additionally, the load balance metric may comprise a load disparity between two laterally spaced points at the (longitudinal) location. Yet alternatively or additionally, the load balance metric may correspond to the lateral displacement as mentioned earlier.

As illustrated by step 320, a difference between the respective lateral load balance metrics is dynamically determined. Typically, but not necessarily, the difference may be represented in absolute values.

The difference being dynamically determined may be seen as tracking the difference value over time during the tipping operation, which enables monitoring of how the difference changes (e.g., increases/decreases) during the tipping operation.

Generally, the dynamically determined difference aims to indicate rollover risk. For example, if there is a rollover risk due to increasing distance between ground and the CoG of the vehicle and/or due to the load dispatch being laterally asymmetric, the lateral load is typically increasingly less balanced at one end of the vehicle (e.g., the rear end) than at the other end of the vehicle (e.g., the front end) during the tipping operation; which can be indicated by increasing difference between the respective load balance metrics of the different locations along the longitudinal dimension of the vehicle.

When lateral load balance metrics are acquired for more than two different locations along the longitudinal dimension of the vehicle, the dynamical determined difference may refer to a collection of differences, wherein each difference is determined for two of the locations. For example, when there are three locations, two or more difference values may be determined; selected among a first difference determined between the front-most and the middle location, a second difference determined between the middle and the rear-most location, and a third difference determined between the front-most and the rear-most location.

Steps 310 and 320 may be performed in association with (e.g., in parallel to, together with, etc.) steps 391, 392, 393, 394 of FIG. 3A.

As illustrated by step 340 (compare with 396 of FIG. 3A), a tipping interruptive action is caused to be performed based on an increase rate of the difference. For example, causing the tipping interruptive action may comprise performing the tipping interruptive action or sending a control signal to some other functional and/or structural unit configured to perform the tipping interruptive action responsive to receiving the control signal.

Generally, the tipping interruptive action may be any suitable tipping interruptive action. For example, the tipping interruptive action may comprise issuing a warning message via an operator interface as illustrated by optional sub-step 342. Alternatively or additionally, the tipping interruptive action may comprise inhibiting (e.g., halting, stopping, or slowing down) the tipping operation as illustrated by optional sub-step 344.

The warning message may be configured to enable an operator of the vehicle to evaluate the situation in relation to the rollover risk. For example, if a temporary support system is in place for hindering rollover (e.g., struts extending laterally from the vehicle), the operator may decide that no further measures need to be taken despite the warning message.

Alternatively or additionally, the warning message may be configured to prompt an operator of the vehicle to take action to prevent rollover. For example, the warning message may prompt (e.g., cause) the operator to halt, stop, or slow down the tipping operation, and/or to reposition the vehicle.

The operator interface may be any suitable man/machine interface (e.g., a visual interface, an audio interface, a haptic interface, etc.). The operator interface may be implemented within the vehicle (e.g., a dashboard, etc.) or within a separate device (e.g., a remote control unit, a smartphone, etc.).

Generally, the causing of the tipping interruptive action to be performed may be based on the increase rate of the difference in any suitable way. For example, causing the tipping interruptive action may be performed responsive to a value of a function ("func") of the increase rate ("rate") exceeding a corresponding threshold value ("thr") as illustrated by optional step **330**. The increase rate may be seen as a predictor of a warp event causing rollover (e.g., as discussed below in relation to **FIG. 4B**).

According to some examples, the function is the identity function; i.e., causing the tipping interruptive action is performed responsive to the increase rate exceeding a threshold value for the increase rate.

According to some examples, causing the tipping interruptive action is performed responsive to a weighted combination of the difference and the increase rate exceeding a threshold value for the weighted combination. Thus, the function could be expressed as $f(\delta) = k\delta + (1 - k)\delta'$, where $\delta$ represents the difference, its derivative $\delta'$ represents the increase rate, and $0 \leq k < 1$ represents a weighting factor.

When lateral load balance metrics are acquired for more than two different locations along the longitudinal dimension of the vehicle (i.e., when there are two or more difference values), the causing of the tipping interruptive action to be performed may be based on the increase rates of the differences in any suitable way. For example, the difference with largest value, or the difference with largest increase value, may be selected and the increase rate of that selected difference may be used to trigger the tipping interruptive action to be performed as described above.

Step **330** may be performed in association with (e.g., in parallel to, together with, etc.) step **395** of **FIG. 3A**. For example, step **340 / 396** may be performed if either or both of the conditions **330 / 395** are fulfilled, or step **340 / 396** may be performed only if both of the conditions **330 / 395** are fulfilled.

FIGs. 4A-B are provided to illustrate some further aspects of the approaches herein.

**FIG. 4A** schematically illustrates a top view cross section of an example vehicle **400,** where the longitudinal dimension of the vehicle **400** is represented by the coordinate axis **430**. For example, **FIG. 4A** may be seen as a schematic representation of the vehicle **200** of FIGs. 2A-C, and/or of the trailer unit **102** or the vehicle **100** of **FIG. 1.**

Four different locations **431, 432, 433, 434** along the longitudinal dimension of the vehicle **400** are shown to exemplify that a location along the longitudinal dimension of the vehicle **400** may be the location of a wheel axle (as illustrated by **431** and **432**) or any other suitable location (as illustrated by **433** and **434**).

In some examples, each of the two different locations used is a respective wheel axle location (compare with **431** and **432**). For example, one of the two locations may be a wheel axle location **431** on the front half of the vehicle **400** (e.g., a front-most wheel axle) and the other one of the two locations may be a wheel axle location **432** on the rear half of the vehicle **400** (e.g., a rear-most wheel axle).

In some examples, at least one of the locations used is a location other than a wheel axle location (compare with **433** and **434**). Generally, any suitable location along the longitudinal dimension of the vehicle **400** may be used. For example, a location may be considered as suitable when a sensor **462a, 462b, 463** is configured to perform measurements from which a lateral load balance metric of the location can be determined (compare with sensors **161, 162** of **FIG. 1**).

Typically, but not necessarily, the two different locations used have a relatively long distance between them (e.g., to entail relatively large difference values). Alternatively or additionally, one of the two locations may be on the front half of the vehicle **400** (e.g., close to a front end of the vehicle) and the other one of the two locations may be on the rear half of the vehicle **400** (e.g., close to a rear end of the vehicle).

In some examples, each of the two locations is associated with a respective sensor (compare with **161, 162** of **FIG. 1** and 261 of **FIG. 2B**).

**FIG. 4B** schematically illustrates a rear view cross section of a vehicle **400'** according to some examples. The vehicle **400'** comprises a vehicle body **410** and a vehicle subsystem **420** for load carrying. The vehicle subsystem **420** for load carrying is configured to be increasingly tilted in relation to the vehicle body **410** for load discharge during a tipping operation of the vehicle **400'**. For example, **FIG. 4B** may be seen as a schematic representation of the vehicle **200** of FIGs. 2A-C, and/or of the trailer unit **102** or the vehicle **100** of **FIG. 1,** and/or of the vehicle **400** of **FIG. 4A.**

The vehicle **400'** is shown in a position with non-zero roll angle **450**. For example, such a position may be caused by the CoG **440** being displaced as illustrated by the dashed line (e.g., during a tipping operation as exemplified above). If the roll angle **450** becomes large enough, a rollover may occur.

It may be noted that there is no tilt between the vehicle body **410** and a vehicle subsystem **420** for load carrying in this example (in contrast to the example of **FIG. 2B**). However, the principles described in relation to FIGs. 4A-B may be applied also in combination with the principles described in relation to FIGs. 2A-C.

The roll angle of a single longitudinal location is typically a rather blunt variable for mitigation of rollover, especially the roll angle for the vehicle body only - ignoring any additional roll between vehicle body and vehicle subsystem for load carrying. For example, during a tipping operation, the roll angle may remain relatively small at some longitudinal locations (e.g., close to the front end of the vehicle) until the rollover suddenly occurs. On the other hand, during a tipping operation, the roll angle may become relatively large at some longitudinal locations (e.g., close to the rear end of the vehicle) without any rollover taking place. Therefore, it may be beneficial to consider the roll angle (or another suitable lateral load balance metric) for two different locations along the longitudinal direction of the vehicle.

During a tipping operation, the increase rate of the difference between roll angles (or other suitable lateral load balance metrics) for two different locations along the longitudinal direction of the vehicle provides a particularly useful parameter for mitigation of rollover. For example, if the roll angle of either, or both, of the two locations (or the difference between the roll angles of the two locations) is relatively large, but stable, rollover might not be imminent. On the other hand, the roll angle of both of the two locations (and/or the difference between the roll angles of the two locations) may be relatively small, but rollover might still be imminent which is manifested in a rapid increase rate.

Thus, a relatively large increase rate of the difference typically indicates that rollover is about to occur, and using such an indicator can entail earlier and/or more accurate detection of potentially upcoming rollover than other approaches.

To further exemplify some benefits of the suggested approach, it may be noted that the construction of a tipper is usually such that a hydraulic tipper arm primarily (or only) supports vertical and longitudinal forces. Consequently, lateral and/or torsional forces are not absorbed by the tipper arm, but are typically transmitted primarily through the hinge mechanism of the tipper (at the rear of the vehicle), which may result in lateral load imbalance that need to be supported by the rear axle. This, in turn, may cause a roll angle to be induced mainly at the rear end of the chassis (warp event). The difference in roll angle between the front end and rear end of the chassis, as well as how it changes over time during the tipping operation, may be monitored by application of the approaches suggested herein. As already noted, the difference in roll angle between two different locations along the longitudinal dimension of the vehicle is of particular interest. If the two locations both have a significant - but same or similar - roll angle, it is typically not due to uneven lateral load not being supported by the tipper arm, but may be due to road banking and might not be indicating a rollover risk. As also noted already, the rate of change (increase rate) of the difference between roll angles of the two locations is a strong and early indicator of imminent rollover (damping in the suspension and chassis typically causes the roll angle to build gradually).

When a wheel axle location is used as location along the longitudinal dimension of the vehicle, the lateral load balance metric may comprise a load disparity between two laterally spaced points along the wheel axle. For example, the two laterally spaced points may be suspension points of the wheel axle (as illustrated by **411** and **412** in **FIG. 4B**), end points of the wheel axle, the wheels of the wheel axle, or any other points where load measurements can be performed (or load data can be otherwise acquired).

More generally, for any location along the longitudinal dimension of the vehicle, the lateral load balance metric may comprise a load disparity between two laterally spaced points associated with (e.g., at) the considered location. For example, the two laterally spaced points may be suspension points between different vehicle parts (e.g., the vehicle body and the vehicle subsystem for load carrying), or any other points where load measurements can be performed (or load data can be otherwise acquired).

Thus, in some examples, the load balance metric is determined based on suspension data indicative of a difference in vertical load between two laterally spaced points associated with the considered location. Referring to the example of **FIG. 4B**, a respective vertical load may be acquired (e.g., measured) for each of the points **411** and **412** and the load balance metric may be determined as the difference between the respective vertical loads of the points **411** and **412.**

When the lateral load balance metric for a considered location along the longitudinal dimension of the vehicle comprises a roll angle (or some parameter associated with the roll angle) at the considered location, it may be determined in any suitable way.

For example, the roll angle may be determined based on acceleration data from an acceleration sensor associated with (e.g., at) the considered location (compare with sensors **161 and 162 of FIG. 1** and sensor **463** of **FIG. 4A**). The acceleration sensor may be any suitable sensor for providing acceleration measurements (e.g., an inertial measurement unit - IMU). In some examples, if measurement data for a location indicates the lateral acceleration $a_y$, the roll angle $\theta_x$ may be approximated (at least for relatively small roll angles) according to $\theta_x \approx a_y/g$, where $g$ represents the gravitational constant. For relatively larger roll angles, more accurate values of the roll angle may be achieved by considering the longitudinal acceleration $a_x$ and the vertical acceleration $a_z$ in addition to the lateral acceleration $a_y$, and/or by using precise trigonometry instead of approximations. If the vehicle is at standstill, the following equation system may apply (with approximations for relatively small roll angles):

$$a_x = -g \cdot \sin(\theta_y) \approx -g \cdot \theta_y$$

$$a_y = +g \cdot \sin(\theta_x) \cdot \cos(\theta_y) \approx +g \cdot \theta_x$$

$$a_z = +g \cdot \cos(\theta_x) \cdot \sin(\theta_y) \approx +g \cdot \theta_y$$

where $\theta_y$ is pitchangle. If the vehicle is not at standstill, other motion terms need to be considered as well (at least if the velocity effect is not negligible).

Alternatively or additionally, the roll angle may be determined based on gyroscopic data from a gyroscopic sensor associated with (e.g., at) the considered location (compare with sensors **161** and **162** of **FIG. 1** and sensor **463** of **FIG. 4A**). The gyroscopic data may indicate the roll angle $\theta_x$ directly or indirectly. Typically, a gyroscopic sensor may provide measurements indicating roll rate, and the roll angle may be derived from those measurements. For example, some gyroscopes are equipped with a filtering function (e.g., implementing the equations described above) and/or an integration function to acquire a roll angle value from the roll rate measurements.

Yet alternatively or additionally, the roll angle (or another suitable lateral load balance metric) may be determined based on ground distance sensor data indicative of a difference in distance to ground between two laterally spaced points associated with (e.g., at) the considered location. For example, as exemplified by sensors **462a, 462b** in **FIGs. 4A** and **4B,** one or more distance sensor(s) may be configured to measure the respective distance to ground at each of the two laterally spaced points (wherein the respective distances are measured from a corresponding vertical location on the vehicle for both of the laterally spaced points). The distance sensors may be any suitable sensors configured to determine a distance (e.g., sensors performing measurements using radar or lidar technology).

Referring to the examples of **FIGs. 4A** and **4B,** if the distance sensors **462a** and **462b** indicate ground distances $d_a$ **491** and $d_b$ **492,** respectively, the absolute-valued roll angle $\theta_x$ **450** for the location **434** may be determined as $\theta_x = \sin^{-1}(|d_a - d_b|/L)$, which may be approximated to $\theta_x = |d_a - d_b|/L$ for small values of the roll angle, where $L$ represents the distance **490** between the sensors **462a** and **462b.** Here, the resulting roll angle value represents the roll of the chassis (i.e., any effect of non-horizontal ground is not included). It should be noted that this roll angle value may differ from the roll angle value determined based on acceleration or gyroscopic sensor measurements. The latter may be termed Euler roll angle, and generally includes both the roll of the chassis and tilting due to non-horizontal ground. Another suitable lateral load balance metric could be $|d_a - d_b|$.

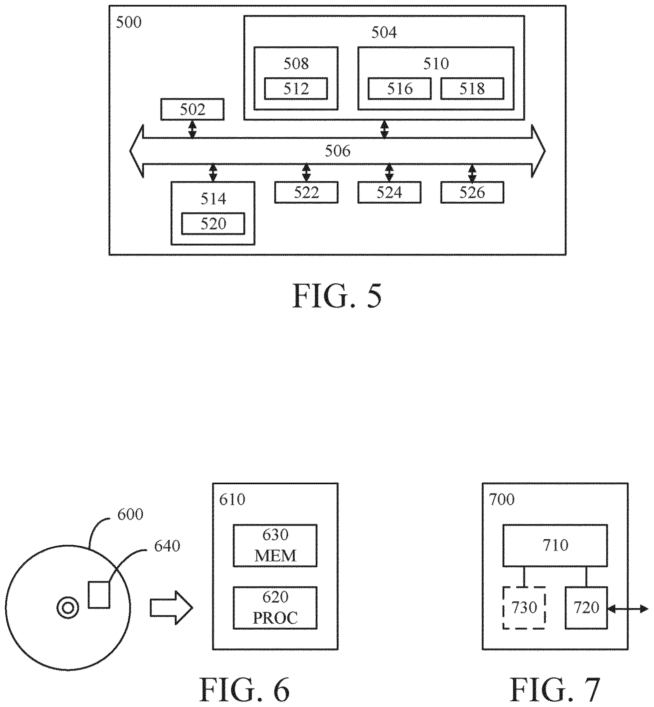

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a control unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **100;** e.g., in the form of a VCU **150.** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit 700 to perform a set of operations, or steps, such as any of the methods described herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling an articulated vehicle **100** comprising a tractor **101** and/or one or more towed vehicle units **102,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

A first non-exhaustive list of examples:

**Example 1:** A computer system for a vehicle comprising a vehicle body and a vehicle subsystem for load carrying, wherein the vehicle subsystem for load carrying is configured to be increasingly tilted in relation to the vehicle body for load discharge during a tipping operation of the vehicle, and wherein a camera mounted on the vehicle body is configured to view a downward facing surface of the vehicle subsystem for load carrying, the computer system comprising processing circuitry configured to, during the tipping operation: acquire image data from the camera; determine respective distances from a location of the camera to two or more laterally spaced portions of the downward facing surface of the vehicle subsystem for load carrying based on the image data; estimate a lateral deflection of the vehicle subsystem for load carrying based on the determined distances; and cause a tipping interruptive action to be performed responsive to the lateral deflection fulfilling a condition indicating rollover risk.

**Example 2:** The computer system of **Example 1,** wherein at least two of the two or more laterally spaced portions of the downward facing surface of the vehicle subsystem for load carrying are associated with an end of the vehicle subsystem for load carrying that is raised during the tipping operation.

**Example 3:** The computer system of any of **Examples 1-2,** wherein the condition indicating rollover risk comprises the lateral deflection exceeding a threshold value for deflection.

**Example 4:** The computer system of any of **Examples 1-3,** wherein the condition indicating rollover risk comprises a change rate of the lateral deflection exceeding a threshold value for deflection rate.

**Example 5:** The computer system of any of **Examples 1-4,** wherein the condition indicating rollover risk is dynamically set based on one or more of: a ground surface banking, a load mass, and a tipping angle.

**Example 6:** The computer system of any of **Examples 1-5,** wherein the tipping interruptive action comprises issuing a warning message via an operator interface and/or inhibiting the tipping operation.

**Example 7:** The computer system of any of **Examples 1-6,** wherein the processing circuitry is further configured to acquire inertial data from an inertial measurement unit (IMU) which is co-located and co-oriented with the camera, and wherein estimation of the lateral deflection of the vehicle subsystem for load carrying is further based on the inertial data.

**Example 8:** A vehicle comprising the computer system of any of **Examples 1-7.**

**Example 9:** The vehicle of **Example 8,** wherein the vehicle comprises a vehicle body and a vehicle subsystem for load carrying, wherein the vehicle subsystem for load carrying is configured to be increasingly tilted in relation to the vehicle body for load discharge during a tipping operation of the vehicle.

**Example 10:** The vehicle of **Example 9,** further comprising a camera mounted on the vehicle body and configured to view a downward facing surface of the vehicle subsystem for load carrying.

**Example 11:** The vehicle of **Example 10,** further comprising an inertial measurement unit (IMU) which is co-located and co-oriented with the camera.

**Example 12:** A computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle, and wherein a camera mounted on the vehicle body is configured to view a downward facing surface of the vehicle subsystem for load carrying, the method comprising, during the tipping operation: acquiring (by processing circuitry of a computer system) image data from the camera; determining (by the processing circuitry) respective distances from a location of the camera to two or more laterally spaced portions of the downward facing surface of the vehicle subsystem for load carrying based on the image data; estimating (by the processing circuitry) a lateral deflection of the vehicle subsystem for load carrying based on the determined distances; and causing (by the processing circuitry) a tipping interruptive action to be performed responsive to the lateral deflection fulfilling a condition indicating rollover risk.

**Example 13:** The method of Example **12,** wherein at least two of the two or more laterally spaced portions of the downward facing surface of the vehicle subsystem for load carrying are associated with an end of the vehicle subsystem for load carrying that is raised during the tipping operation.

**Example 14:** The method of any of Examples **12-13,** wherein the condition indicating rollover risk comprises the lateral deflection exceeding a threshold value for deflection.

**Example 15:** The method of any of Examples **12-14,** wherein the condition indicating rollover risk comprises a change rate of the lateral deflection exceeding a threshold value for deflection rate.

**Example 16:** The method of any of Examples **12-15,** wherein the condition indicating rollover risk is dynamically set based on one or more of: a ground surface banking, a load mass, and a tipping angle.

**Example 17:** The method of any of Examples **12-16,** wherein the tipping interruptive action comprises issuing a warning message via an operator interface and/or inhibiting the tipping operation.

**Example 18:** The method of any of Examples **12-17,** further comprising acquiring, by the processing circuitry, inertial data from an inertial measurement unit - IMU - which is co-located and co-oriented with the camera, and wherein the lateral deflection of the vehicle subsystem for load carrying is further estimated based on the inertial data.

**Example 19:** A computer program product comprising program code for performing, when executed by the processing circuitry, the method of any of **Examples 12-18.**

**Example 20:** A non-transitory computer-readable storage medium comprising instructions, which when executed by the processing circuitry, cause the processing circuitry to perform the method of any of **Examples 12-18.**

A second non-exhaustive list of examples (each item of which may be combined with any item of the first non-exhaustive list of examples, as suitable):

**Example 1:** A computer system for a vehicle, wherein the vehicle comprises a vehicle body and a vehicle subsystem for load carrying, wherein the vehicle subsystem for load carrying is configured to be increasingly tilted in relation to the vehicle body for load discharge during a tipping operation of the vehicle, the computer system comprising processing circuitry configured to, during the tipping operation: acquire respective lateral load balance metrics for two different locations along the longitudinal dimension of the vehicle; dynamically determine a difference between the respective lateral load balance metrics; and cause a tipping interruptive action to be performed based on an increase rate of the difference.

**Example 2:** The computer system of **Example 1,** wherein the processing circuitry is configured to cause the tipping interruptive action responsive to the increase rate exceeding a threshold value for the increase rate.

**Example 3:** The computer system of any of **Examples 1-2,** wherein the processing circuitry is configured to cause the tipping interruptive action responsive to a weighted combination of the difference and the increase rate exceeding a threshold value for the weighted combination.

**Example 4:** The computer system of any of **Examples 1-3,** wherein the tipping interruptive action comprises issuing a warning message via an operator interface and/or inhibiting the tipping operation.

**Example 5:** The computer system of any of **Examples 1-4,** wherein each of the two different locations is a respective wheel axle location.

**Example 6:** The computer system of **Example 5,** wherein the lateral load balance metric comprises a load disparity between two laterally spaced points along the wheel axle.

**Example 7:** The computer system of any of **Examples 1-6,** wherein the lateral load balance metric for a considered location along the longitudinal dimension of the vehicle comprises a roll angle at the considered location.

**Example 8:** The computer system of any of **Examples 1-7,** wherein the processing circuitry is further configured to determine the lateral load balance metric.

**Example 9:** The computer system of any of **Examples 1-8,** wherein the lateral load balance metric is determined based on one or more of: acceleration data from an acceleration sensor associated with the considered location; gyroscopic data from a gyroscopic sensor associated with the considered location; suspension data indicative of a difference in vertical load between two laterally spaced points associated with the considered location; and ground distance sensor data indicative of a difference in distance to ground between two laterally spaced points associated with the considered location.

**Example 10:** A vehicle comprising a vehicle body and a vehicle subsystem for load carrying, wherein the vehicle subsystem for load carrying is configured to be increasingly tilted in relation to the vehicle body for load discharge during a tipping operation of the vehicle, the vehicle further comprising the computer system of any of **Examples 1-9.**

**Example 11:** A computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle, the method comprising, during the tipping operation: acquiring, by processing circuitry of a computer system, respective lateral load balance metrics for two different locations along the longitudinal dimension of the vehicle; dynamically determining, by the processing circuitry, a difference between the respective lateral load balance metrics; and causing, by the processing circuitry, a tipping interruptive action to be performed based on an increase rate of the difference.

**Example 12:** The method of **Example 11,** wherein causing the tipping interruptive action is performed responsive to the increase rate exceeding a threshold value for the increase rate.

**Example 13:** The method of any of **Examples 11-12,** wherein causing the tipping interruptive action is performed responsive to a weighted combination of the difference and the increase rate exceeding a threshold value for the weighted combination.

**Example 14:** The method of any of **Examples 11-13,** wherein the tipping interruptive action comprises issuing a warning message via an operator interface and/or inhibiting the tipping operation.

**Example 15:** The method of any of **Examples 11-14,** wherein each of the two different locations is a respective wheel axle location.

**Example 16:** The method of **Example 15,** wherein the lateral load balance metric comprises a load disparity between two laterally spaced points along the wheel axle.

**Example 17:** The method of any of **Examples 11-16,** wherein the lateral load balance metric for a considered location along the longitudinal dimension of the vehicle comprises a roll angle at the considered location.

**Example 18:** The method of any of **Examples 11-17,** further comprising determining, by the processing circuitry, the lateral load balance metric.

**Example 19:** The method of any of **Examples 11-18,** wherein the lateral load balance metric is determined based on one or more of: acceleration data from an acceleration sensor associated with the considered location; gyroscopic data from a gyroscopic sensor associated with the considered location; suspension data indicative of a difference in vertical load between two laterally spaced points associated with the considered location; and ground distance sensor data indicative of a difference in distance to ground between two laterally spaced points associated with the considered location.

**Example 20:** A computer program product comprising program code for performing, when executed by processing circuitry, the method of any of **Examples 11-19.**

**Example 21:** A non-transitory computer-readable storage medium comprising instructions, which when executed by processing circuitry, cause the processing circuitry to perform the method of any of **Examples 11-19.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for a vehicle (100, 200) comprising a vehicle body (110, 210) and a vehicle subsystem (120, 220) for load carrying, wherein the vehicle subsystem for load carrying is configured to be increasingly tilted in relation to the vehicle body for load discharge during a tipping operation of the vehicle, and wherein a camera (161a, 261) mounted on the vehicle body is configured to view a downward facing surface (121, 221) of the vehicle subsystem for load carrying, the computer system comprising processing circuitry configured to, during the tipping operation:

   acquire image data from the camera;
   determine respective distances from a location of the camera to two or more laterally spaced portions (273, 274) of the downward facing surface of the vehicle subsystem for load carrying based on the image data;
   estimate a lateral deflection of the vehicle subsystem for load carrying based on the determined distances; and
   cause a tipping interruptive action to be performed responsive to the lateral deflection fulfilling a condition indicating rollover risk.

2. The computer system of claim 1, wherein at least two of the two or more laterally spaced portions of the downward facing surface of the vehicle subsystem for load carrying are associated with an end (175, 275) of the vehicle subsystem for load carrying that is raised during the tipping operation.

3. The computer system of any of claims 1-2, wherein the condition indicating rollover risk comprises the lateral deflection exceeding a threshold value for deflection.

4. The computer system of any of claims 1-3, wherein the condition indicating rollover risk comprises a change rate of the lateral deflection exceeding a threshold value for deflection rate.

5. The computer system of any of claims 1-4, wherein the condition indicating rollover risk is dynamically set based on one or more of: a ground surface banking, a load mass, and a tipping angle (165).

6. A vehicle (100, 200) comprising the computer system (500) of any of claims 1-5.

7. A computer-implemented method (390) for a vehicle (100, 200) comprising a vehicle body (110, 210) and a vehicle subsystem (120, 220) for load carrying, wherein the vehicle subsystem for load carrying is configured to be increasingly tilted in relation to the vehicle body for load discharge during a tipping operation of the vehicle, and wherein a camera (161a, 261) mounted on the vehicle body is configured to view a downward facing surface (121, 122) of the vehicle subsystem for load carrying, the method comprising, during the tipping operation:

   acquiring (391), by processing circuitry of a computer system, image data from the camera;
   determining (393), by the processing circuitry, respective distances from a location of the camera to two or more laterally spaced portions (273, 274) of the downward facing surface of the vehicle subsystem for load carrying based on the image data;
   estimating (394), by the processing circuitry, a lateral deflection of the vehicle subsystem for load carrying based on the determined distances; and
   causing (396), by the processing circuitry, a tipping interruptive action to be performed responsive to the lateral deflection fulfilling (395) a condition indicating rollover risk.

8. The method of claim 7, wherein at least two of the two or more laterally spaced portions of the downward facing surface of the vehicle subsystem for load carrying are associated with an end (175, 275) of the vehicle subsystem for load carrying that is raised during the tipping operation.

9. The method of any of claims 7-8, wherein the condition indicating rollover risk comprises the lateral deflection exceeding a threshold value for deflection.

10. The method of any of claims 7-9, wherein the condition indicating rollover risk comprises a change rate of the lateral deflection exceeding a threshold value for deflection rate.

11. The method of any of claims 7-10, wherein the condition indicating rollover risk is dynamically set based on one or more of: a ground surface banking, a load mass, and a tipping angle (165).

12. The method of any of claims 7-11, wherein the tipping interruptive action comprises issuing (397) a warning message via an operator interface and/or inhibiting (398) the tipping operation.

13. The method of any of claims 7-12, further comprising acquiring (392), by the processing circuitry, inertial data from an inertial measurement unit (161b) - IMU - which is co-located and co-oriented with the camera, and wherein the lateral deflection of the vehicle subsystem for load carrying is further estimated (394) based on the inertial data.

14. A computer program product (600) comprising program code for performing, when executed by the processing circuitry, the method of any of claims 7-13.

15. A non-transitory computer-readable storage medium (600) comprising instructions, which when executed by the processing circuitry, cause the processing circuitry to perform the method of any of claims 7-13.

**Amended claims in accordance with Rule 137(2) EPC.**

1. A computer system (500) for a vehicle (100, 200) comprising a vehicle body (110, 210) and a vehicle subsystem (120, 220) for load carrying, wherein the vehicle subsystem for load carrying is configured to be increasingly tilted in relation to the vehicle body for load discharge during a tipping operation of the vehicle, and wherein a camera (161a, 261) mounted on the vehicle body is configured to view a downward facing surface (121, 221) of the vehicle subsystem for load carrying, the computer system comprising processing circuitry configured to, during the tipping operation:

acquire image data from the camera;
determine respective distances from a location of the camera to two or more laterally spaced portions (273, 274) of the downward facing surface of the vehicle subsystem for load carrying based on the image data;
estimate a lateral deflection of the vehicle subsystem for load carrying based on the determined distances; and
cause a tipping interruptive action to be performed responsive to the lateral deflection fulfilling a condition indicating rollover risk,
wherein the condition indicating rollover risk comprises the lateral deflection exceeding a threshold value for deflection and/or a change rate of the lateral deflection exceeding a threshold value for deflection rate, and
wherein the condition indicating rollover risk is dynamically set based on a tipping angle (165), wherein the threshold(s) are lowered as the tipping angle increases.

2. The computer system of claim 1, wherein at least two of the two or more laterally spaced portions of the downward facing surface of the vehicle subsystem for load carrying are associated with an end (175, 275) of the vehicle subsystem for load carrying that is raised during the tipping operation.

3. The computer system of any of claims 1-2, wherein the condition indicating rollover risk is dynamically set further based on one or more of: a ground surface banking, and a load mass.

4. A vehicle (100, 200) comprising the computer system (500) of any of claims 1-3.

5. A computer-implemented method (390) for a vehicle (100, 200) comprising a vehicle body (110, 210) and a vehicle subsystem (120, 220) for load carrying, wherein the vehicle subsystem for load carrying is configured to be increasingly tilted in relation to the vehicle body for load discharge during a tipping operation of the vehicle, and wherein a camera (161a, 261) mounted on the vehicle body is configured to view a downward facing surface (121, 122) of the vehicle subsystem for load carrying, the method comprising, during the tipping operation:

acquiring (391), by processing circuitry of a computer system, image data from the camera;
determining (393), by the processing circuitry, respective distances from a location of the camera to two or more laterally spaced portions (273, 274) of the downward facing surface of the vehicle subsystem for load carrying based on the image data;
estimating (394), by the processing circuitry, a lateral deflection of the vehicle subsystem for load carrying based on the determined distances; and
causing (396), by the processing circuitry, a tipping interruptive action to be performed responsive to the lateral deflection fulfilling (395) a condition indicating rollover risk,
wherein the condition indicating rollover risk comprises the lateral deflection exceeding a threshold value for deflection and/or a change rate of the lateral deflection exceeding a threshold value for deflection rate, and
wherein the condition indicating rollover risk is dynamically set based on a tipping angle (165), wherein the threshold(s) are lowered as the tipping angle increases.

6. The method of claim 5, wherein at least two of the two or more laterally spaced portions of the downward facing surface of the vehicle subsystem for load carrying are associated with an end (175, 275) of the vehicle subsystem for load carrying that is raised during the tipping operation.

7. The method of any of claims 5-6, wherein the condition indicating rollover risk is dynamically set further based on one or more of: a ground surface banking, and a load mass.

8. The method of any of claims 5-7, wherein the tipping interruptive action comprises issuing (397) a warning message via an operator interface and/or inhibiting (398) the tipping operation.

9. The method of any of claims 5-8, further comprising acquiring (392), by the processing circuitry, inertial data from an inertial measurement unit (161b) - IMU - which is co-located and co-oriented with the camera, and wherein the lateral deflection of the vehicle subsystem for load carrying is further estimated (394) based on the inertial data.

10. A computer program product (600) comprising program code for performing, when executed by the processing circuitry, the method of any of claims 5-9.

11. A non-transitory computer-readable storage medium (600) comprising instructions, which when executed by the processing circuitry, cause the processing circuitry to perform the method of any of claims 5-9.

FIG. 1

FIG. 2A

FIG. 2B

FIG. 2C

Acquire
image data

Acquire
inertial data

393
Determine distances

394
Estimate lateral deflection

395
Fulfilled?

yes

396
Cause interruptive action

397
Warn

398
Inhibit

FIG. 3A

310
Acquire load balance metrics

312
Determine

314
Receive

320
Determine difference

330
func(rate)
> thr?

yes

340
Cause interruptive action

342
Warn

344
Inhibit

FIG. 3B

430

400

431

463

433

432

434

462a    490    462b

FIG. 4A

400'

420

450

440

462a

410

491    492

411    412

FIG. 4B

FIG. 5

FIG. 6

FIG. 7

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 413 461 A1 (DAIMLER CHRYSLER AG [DE]) 28 April 2004 (2004-04-28) * paragraphs [0011] - [0017], [0022] - [0025] * * figures 1-4 * | 1-15 | INV. B60P1/04 B60W30/04 |
| X | DE 42 27 886 A1 (SEL ALCATEL AG [DE]) 24 February 1994 (1994-02-24) * figures 1, 2 * | 1-15 | |
| A | SE 2 351 271 A1 (VOLVO TRUCK CORP [SE]) 6 November 2023 (2023-11-06) * paragraphs [0024] - [0033] * * figures 1-4 * | 1-15 | |

**TECHNICAL FIELDS SEARCHED (IPC)**

B60P
B60W
E02F
B66C
B66F

The present search report has been drawn up for all claims

| Place of search | Date of completion of the search | Examiner |
|---|---|---|
| The Hague | 6 February 2025 | Larangeira, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6146

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2025

| Patent document cited in search report | | Publication date | Patent family member(s) | | Publication date |
|---|---|---|---|---|---|
| EP 1413461 | A1 | 28-04-2004 | DE | 10249719 A1 | 06-05-2004 |
| | | | EP | 1413461 A1 | 28-04-2004 |
| DE 4227886 | A1 | 24-02-1994 | NONE | | |
| SE 2351271 | A1 | 06-11-2023 | NONE | | |

EPO FORM P0459

For more details about this annex : see Official Journal of the European Patent Office, No. 12/82